## Europäisches Patentamt
## European Patent Office
## Office européen des brevets

(19)

(11) Publication number: **0 112 052**
**A1**

(12) # EUROPEAN PATENT APPLICATION

(21) Application number: **83306997.4**

(22) Date of filing: **16.11.83**

(51) Int. Cl.³: **A 01 G 17/06**

(30) Priority: **26.11.82 GB 8233706**

(43) Date of publication of application:
**27.06.84 Bulletin 84/26**

(84) Designated Contracting States:
**BE DE FR NL**

(71) Applicant: **Eccles, George David Aubrey**
**The Orchards**
**Braiseworth Eye, Suffolk(GB)**

(72) Inventor: **Eccles, George David Aubrey**
**The Orchards**
**Braiseworth Eye, Suffolk(GB)**

(74) Representative: **Smith, Geoffrey Leonard et al,**
**Marks & Clerk 57/60 Lincoln's Inn Fields**
**London WC2A 3LS(GB)**

(54) An aid for use in the training of fruit trees.

(57) An aid for use in the training of fruit trees, especially apples and pears, comprises a plurality of strips (1) of a pliable material, between 80 and 300 cm long, the strips (1) being separate for most to their lengths but joined together (3) at one end only, the joined ends being arranged (2) for fixing to a supporting stake. The strips are preferably of weather resistant plastics material, e.g. P.V.C. The method of use comprises attaching the joined ends to a supporting stake (4), e.g. with a nail, and tying a separate strip (1) to each of the laterals (6) to be trained while urging the lateral (6) into a position which is substantially horizontal or below.

FIG. 2.

EP 0 112 052 A1

# AN AID FOR THE USE IN THE TRAINING OF FRUIT TREES

The present invention relates to a device for use in training fruit trees to increase their fruiting capability and to a method of training trees using such a device.

The basis of the present invention is the requirement to train the laterals of fruit trees, such as apple and pear trees, so that they are as near as possible horizontal or below. Horizontally directed branches have a number of advantages over those that are vertically inclined. They tend to be structurally stronger, that is to say less liable to split out of a tree when heavily laden with fruit. More importantly, they are more productive of fruit, since flower buds are more readily formed on such branches. Furthermore, the production of fruit spurs is more evenly distributed over the entire branch surface as distinct from the phenomenon of excessive vigour from the terminal position and little or no growth in the central and basal positions. Of particular importance when trees are grown commercially in an orchard is the fact that less pruning is needed when trees are trained in this way and worthwhile crops are borne considerably earlier in the life of the tree.

Horizontal laterals have been produced in the past by training the tree on horizontal wires, as in the well known espalier system . Espalier trees are acceptable in the garden, but are too complicated and expensive for commercial use.

The application of horizontal training to orchard trees has received considerable emphasis recently. At the outset, this ideal was achieved by the removal of all narrow-angled (i.e.nearly vertical) branch-forming laterals and the retention of only those shoots that grew out at a sufficiently wide angle were deemed suitable for branch-forming purposes (see, for example, "Pruning Apple Trees" by C.R. Thompson, Faber 1966). The importance attached to the production of wide-angled branches was such that research has been stimulated into initiation of such branches by chemical means and this technique is of particular importance in the nursery where young trees are produced.

It is increasingly the practice in orchards to tie down young branch-forming shoots when they are too vertically inclined, so that they are pulled into a substantially horizontal position. This method involves the tying and pegging of shoots and has been popularised in the specialist press (see, for example, D.I.Neuteboom, Cox Production in England, Grower Books, London 1978).

A problem in the use of a conventional material, such as string or bailer twine, is that it involves a considerable amount of labour in cutting the appropriate lengths, attaching them to a stake and attaching them to the branches. These materials tend to degrade fairly rapidly and are also liable to strangle the shoots to which they are attached. Special clips and screw pegs are available, but on an orchard scale tend to be undesirably costly.

There is thus the need for a simple, low-cost restraining device for quick and simple attachment to each tree to provide the necessary training.

According to the invention there is provided an aid for use in the training of fruit trees comprising a plurality of strips of a freely flexible material, each between 80 and 300 cm long, the strips being separate for most of their lengths but joined together at one end only, the joined ends being arranged for fixing to a supporting stake.

The aid may be formed by any suitable means. In general it is convenient to take a plurality of separate strips, superimpose them one on another at the end to be fixed and firmly fix them together in the superimposed arrangement, for example with an anti-tear stud or clip, a rivet or a staple. An alternative embodiment is envisaged in which the strips are formed from one integral sheet of material by forming a number of parallel slits running lengthwise of the material and proceeding from one end of the material almost to the other.    For compactness, the unslit end can then be folded or rolled about the longitudinal axis of the material and secured, e.g. with a staple.

The free ends of the material are conveniently left unadapted so that they can simply be hitched around the branch to be restrained.  Alternatively, they can be provided with buckles or clips in the manner of plant ties now known and used.  For cheapness and simplicity, they are preferably left as plain straps. The joined ends of the straps are conveniently provided with a perforation, for example an eyelet, to receive a fixing nail to attach the aid to the supporting stake of the tree.

The straps may be formed from any suitable pliable material.  The material should preferably be weather-resistant and in particular should be able to withstand solar radiation and crop sprays.   Agricultural grade UV-stabilised P.V.C. sheeting is particularly applicable to this purpose although other plastics materials can be used, for example polyolefines.

The word "strip" is used in this specification in general to imply a flat strap-like structure, as this is preferable for the avoidance of strangulation.  However twisted or cordlike structures are also considered with the ambit of the invention. Where flat strips are used, and depending on the guage of the material, the strips are preferably from 5 to 25 mm wide and especially about 12 mm wide. The gauge should be sufficient to resist the pull exerted by a strong young lateral, e.g. about 1 to 2 kg. The strips should be pliable, for ease of use, but should not be particularly elastic. In general, it is undesirable to allow stretching of more than 7 or 8 cm per metre length. Each aid should have a plurality of strips, sufficient to deal with all the lateral to be trained in any one tree. In general from 4 to 16 strips is considered suitable, especially 8 to 12. The strips can all be the same length ( for ease of manufacture) or, alternatively, can be provided in a selection of lengths so that some are suitable for lower branches and some for higher branches. Although the main use of the aid will be in the training of young trees, it is also applicable to the training of young growth in older trees, for example where a tree has been rejuvenated by having the top removed.

A preferred embodiment is now described with reference to the accompanying drawings.

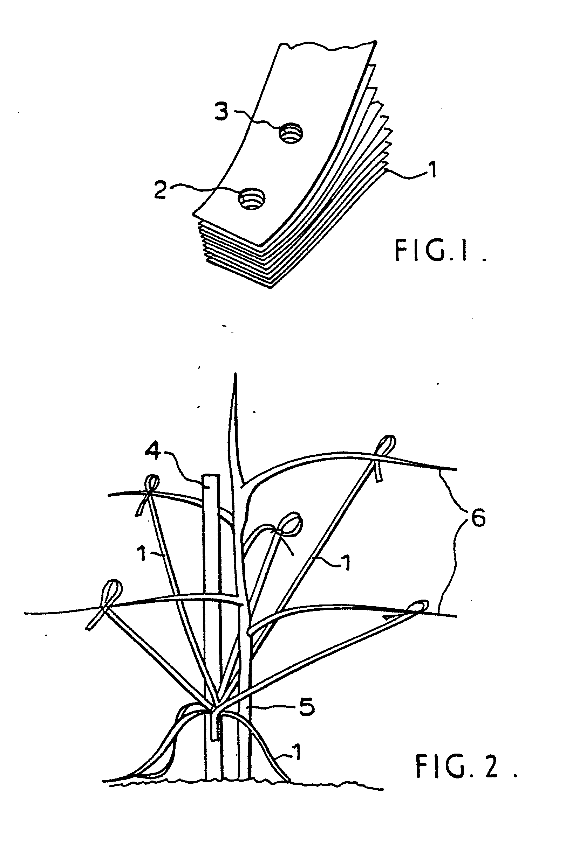

Strips 1 of grey 0.25 mm (10 thou) gauge agricultural grade P.V.C. sheet 12 mm wide by 2.0 m long are superimposed at one end as shown in Figure 1 and punched with two holes 2 and 3. The hole 2 nearest the end of each strip is then fitted with a metal or plastic eyelet of a diameter sufficient to receive a stout galvanised fixing nail. The other hole 3 is fitted with an anti-tear stud to hold the strips tightly together.

In use, as shown in Figure 2, the aid is nailed, using the hole 2, to the bottom of a supporting stake 4 by the side of a young tree 5. Individual strips 1 are then taken in turn and attached to laterals 6 so that the laterals are each held in an approximately horizontal position. Any spare strips 1 can be left trailing as shown or alternatively can be wound around the ones in use.

After the branches are set in the new position, the strips can be untied and the aid removed for use again on another tree.

Various modifications can be made within the scope of the invention as defined in the appended claims.

C L A I M S

1.      An aid for use in the training of fruit trees,
(5) characterised  by comprising a pluarality of
strips (1) of a freely flexible material, each between
80 and 300 cm long, the strips (1) being separate for
most of their lengths but joined together (3) at one
end only, the joined ends being arranged (2) for fixing
to a supporting stake (4).

2.      An aid according to claim 1, characterised in
that it is formed by fixing together at one end a
plurality of separate strips (1) superimposed on one
another.

3.      An aid according to claim 1 or claim 2, characterised in that the joined ends are perforated (2)
to receive a fixing nail.

4.      An aid according to any of claims 1 to 3,
characterised in that the strips (1) are formed of
weather-resistant plastics material.

5.      An aid according to any of the preceding claims,
characterised in that the strips (1) are provided with
buckles or the like for tying to branches (6).

6.      A method of training fruit trees (5) characterised in that several young laterals 6 are urged into a
position which is substantially horizontal or below by use of an aid according to any of claims 1 to 5.


7.      A method according to claim 6, for training apple or pear trees.

FIG.1.

FIG. 2.

European Patent
Office

**EUROPEAN SEARCH REPORT**

0112052
Application number

EP 83 30 6997

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A- 741 393 (WELLS)<br>* Whole document * | 1 | A 01 G 17/06 |
| X | FR-A- 367 675 (BLE)<br>* Whole document * | 1 | |

TECHNICAL FIELDS
SEARCHED (Int. Cl. ³)

A 01 G

The present search report has been drawn up for all claims

| Place of search<br>THE HAGUE | Date of completion of the search<br>23-02-1984 | Examiner<br>HERYGERS J.J. |
|---|---|---|